# EUROPEAN PATENT SPECIFICATION

(11) **EP 1 580 936 B1**
(45) Date of publication and mention of the grant of the patent: **11.06.2008**
(21) Application number: 05101535.2
(22) Date of filing: 01.03.2005
(51) Int. Cl.: H04L 12/28, H04Q 7/38

(54) **Subscriber authentication**
Teilnehmer Authentifizierung
Procédé d'authentification d'abonné

(30) Priority: 23.03.2004 FI 20045094
(43) Date of publication of application: 28.09.2005
(73) Proprietor: TeliaSonera Finland Oyj, 00510 Helsinki (FI)
(72) Inventor: Vitikka, Ilpo, 00100, Helsinki (FI); Keisala, Ilkka, 02710, Espoo (FI)
(74) Representative: Holmström, Stefan Mikael

(56) References cited:
- EP-A- 0 714 219
- EP-A- 0 917 328
- WO-A-20/04002073
- WO-A-20/04105426
- WO-A-20/05011205
- 3GPP TSG SA WG3 SECURITY: "Technical Specification Group Service and System Aspects; Wireless Local Area Network (WLAN) Interworking Security; (Release 6)" 8 October 2002 (2002-10-08), 3GPP TS 33.CDE V0.1.0, PAGE(S) 1-31 , XP002283825 * page 14, paragraph 6.1.2 - page 17, paragraph 6.2 *
- HAVERINEN H ET AL: "CELLULAR ACCESS CONTROL AND CHARGING FOR MOBILE OPERATOR WIRELESS LOCAL AREA NETWORKS" IEEE WIRELESS COMMUNICATIONS, IEEE SERVICE CENTER, PISCATAWAY, NJ, US, vol. 9, no. 6, December 2002 (2002-12), pages 52-60, XP001143468 ISSN: 1070-9916
- ALA-LAURILA J ET AL: "WIRELESS LAN ACCESS NETWORK ARCHITECTURE FOR MOBILE OPERATORS" IEEE COMMUNICATIONS MAGAZINE, IEEE SERVICE CENTER. PISCATAWAY, N.J, US, vol. 39, no. 11, November 2001 (2001-11), pages 82-89, XP001107810 ISSN: 0163-6804

## Description

### BACKGROUND OF THE INVENTION

### 1. Field of the Invention

The present invention relates to subscriber authentication. The invention can be advantageously utilized in a WLAN (Wireless Local Area Network) system in order to authenticate a subscriber. However, it is important to observe that the present invention can be used also in other types of systems.

### 2. Description of Prior Art

There are previously known solutions where a subscriber is authenticated or respectively re-authenticated such that an authentication server is provided with the necessary authentication information in order to authenticate a subscriber. Thus the authentication server can, by using the authentication information and an authentication message received from the subscriber, verify whether the authentication message is transmitted from an authentic subscriber. If so, then the authentication has been successful, otherwise the authentication has failed. If the authentication has been successful, then the subscriber is provided with access to the services offered by the communication system.

A problem with prior art authentication methods of the above described type is that prior art authentication methods may under some circumstances provide a subscriber with access to the communication system, although the operator at that moment considers this subscriber as an unauthorized user of the communication system. A situation of this kind may occur, for instance, when the operator has recently cancelled the account of a subscriber, and the subscriber is roaming in another network. In such a case re-authentication of the subscriber may be successful and the subscriber is given access to the visited network. A situation of this kind may occur also when the authentication is based on a user identity and password entered by the user via a user interface of a subscriber station. In this case a situation may occur where two different subscriber stations are used to access the communication system simultaneously by using the same user identity and password.

Previously there is known from WO 2004/002073 A2 an Inter-Working Function (IWF) for a communication system. In this solution an IWF authenticates a WLAN subscriber based on information in an Authentication Vector (AV). If the IWF has the AV when the WLAN subscriber is attempting to access the WLAN, the IWF carries out the authentication independently. In such a situation authentication might be successful and the subscriber might gain access to the WLAN also though the operator has recently cancelled the account of a subscriber. Only in case the IWF does not have the AV when the WLAN subscriber is attempting to access the WLAN, the IWF requests the AV from an Authentication Center, in which case it might be detected that the account of the subscriber has been cancelled. Such a solution is, however, not sufficient in order to prevent that subscribers which, according to the opinion of the operator, are unauthorized users of the system, from accessing a communication system

### SUMMARY OF THE INVENTION

An object of the present invention is to solve the above mentioned drawback and to provide a solution which makes it possible to prevent that subscribers which, according to the opinion of the operator, are unauthorized users of the system, from accessing a communication system. These and other objects of the invention are achieved with the method of independent claim 1, the communication system of independent claim 5 and the server of independent claim 9.

The present invention improves prior art authentication solutions by introducing an additional check into the authentication of the subscriber. This additional check is carried out by retrieving status information about the subscriber from a subscriber database in connection with authentication. Thus, it is no longer sufficient that the subscriber is capable of providing a correct authentication message to the system in order to gain access to the system. Instead a status check is also carried out for the subscriber in question. This status check will provide additional information about the subscriber such that a situation can be avoided where access is provided to a subscriber, although the operator at that moment considers this subscriber as an unauthorized user.

The most significant advantage achieved by the invention is that it improves the operators possibility to restrict unauthorized subscribers from accessing the network, as the operator can change the status information of these subscribers in the subscriber database in such a way that access is denied in connection with authentication. An other significant advantage with the present invention is that situations where two subscriber stations are simultaneously accessing the system by using the same user identity and password in the authentication, can be avoided.

Preferred embodiments of the method, communication system and server of the invention are disclosed in the dependent claims 2 to 4, 6 to 8 and 10.

### BRIEF DESCRIPTION OF THE DRAWINGS

In the following the invention will be described in more detail by way of example and with reference to the attached drawings, in which

Figure 1 is a block diagram illustrating a first preferred embodiment of the present invention.

Figure 2 is a block diagram illustrating a second preferred embodiment of the present invention.

### DESCRIPTION OF THE PREFERRED EMBODIMENTS

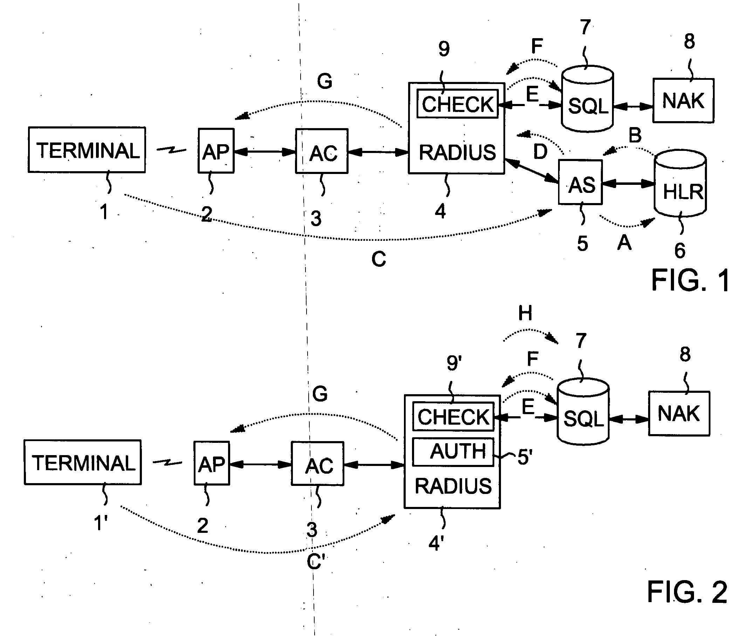

Figure 1 is a block diagram illustrating a first preferred embodiment of the present invention. It is assumed by way of example in Figure 1 that a subscriber 1 is a WLAN subscriber, who accesses the communication system via a radio path provided by an access point 2 (a base station in this example) and an access server 3.

The terminal used by the subscriber 1 is assumed to be a terminal with an EAP SIM client (Extensible Authentication Protocol IEEE 802.1x, Subscriber Identity Module). The terminal thus includes a SIM which makes it possible for the user to utilize WLAN services and to have the costs of the services used added to the bill of the subscriber's mobile phone.

The system of Figure 1 also includes a server 4, which is assumed to be a RADIUS server (Remote Authentication Dial In User Service). RADIUS servers are used to interconnect the WLAN networks of different operators to each other. This interconnection makes it possible to, for instance, offer roaming services for the subscribers. The system of Figure 1 further includes authentication means 5 arranged in an authentication server. This server functions as a EAP SIM server, which makes it possible to authenticate subscribers with EAP SIM clients. In order to carry out such authentication the authentication means communicate with a mobile communication system, such as a home location register 6 of the GSM system (Global System for Mobile communications).

A subscriber database 7 includes information about the WLAN subscribers. The subscriber database 7 is in the example of Figure 1 connected to an operator customer care and billing system 8, which is used by the operator to update the subscriber information in the subscriber database 7 and the home location register 6, for instance. When a new subscriber with an EAP SIM client is added to the WLAN system, the operator adds subscriber information about this new subscriber to the subscriber database 7 and the home location register 6. If, on the other hand, the existing account of a WLAN subscriber is cancelled, then the operator utilizes the customer care and billing system 8 to enter this information into the subscriber database 7.

The subscriber authentication of an EAP SIM client is based on authentication information obtained from the mobile communication system. EAP SIM authentication is previously known and therefore not explained in detail. In brief, when the subscriber 1 has been identified, the authentication means 5 receive authentication information from the mobile communication system, which in this case is the GSM system. The authentication is based on a challenge response mechanism. The EAP SIM client receives a challenge RAND and uses a predetermined algorithm to calculate a response SRES by utilizing a secret key, which is unique for the SIM in question. The authentication information including GSM triplets is received by the authentication means 5 from the mobile communication system. This authentication information includes RAND and SRES pairs. The RAND is transmitted to the subscriber 1 which utilizes the secret key of the SIM to calculate a response with the authentication algorithm. This response is returned in an authentication message to the authentication means, which compare the response with the SRES. If the response matches the SRES, then the authentication has been successful. In EAP SIM authentication, however, several GSM triplets are combined in order to perform one authentication. The EAP SIM authentication also enhances the basic GSM authentication by accompanying the RAND challenges and other messages with a Message Authentication Code in order to provide mutual authentication.

In the following the authentication according to the present invention is explained. The figures do not show all messages which relate to authentication, but only those messages which are important in order to understand the present invention. In order to be able to authenticate the subscriber 1, the authentication means transmit a request A for authentication triplets to the home location register 6 of the GSM system. The home location register responds to this request by transmitting B authentication information to the authentication means 5. This authentication information includes several triplets for the subscriber 1, which means that the authentication means can authenticate the subscriber 1 several times before it needs to request more triplets from the home location register.

When the subscriber 1 in connection with the authentication transmits an authentication message C via the radio path, this message is received by the access point 2 and forwarded through the network to the authentication means 5. The term authentication message refers here to a message which includes the necessary information which makes it possible to authenticate the subscriber. In case the subscriber has been already previously authenticated and the authentication message relates to re-authentication, then the authentication means may already have the necessary authentication information for the subscriber in question, and messages indicated by A and B are not transmitted before the reception of the authentication message. Once the authentication message has been received, the authentication means compare the content of the authentication message C with the authentication information previously obtained for the subscriber 1. Depending on this comparison the authentication means 5 inform D the server 4 that the authentication has been successful or that it has failed.

If the server 4 receives information indicating successful authentication, then checking means 9 of the server transmit a message E to the subscriber database 7 in order to obtain status information for the subscriber in question. The checking means can be implemented as a circuit, a computer program, or a combination of these. This status information is received by the server in message F. The received status information is used by the server 4 to carry out a check, where it is determined if the user account has been cancelled.

If the checking means 9 detect that the user account has been cancelled, then the server 4 transmits via the network to the access point 2 a message G indicating that the authentication has failed. Otherwise this message G indicates that the authentication has been successful. If the access point 2 receives a message G indicating that the authentication has failed, then the subscriber 1 is no longer provided with access to the network.

The present invention has been explained above in connection with "full authentication", in other words when authentication information is obtained from the mobile communication system. However, the present invention can advantageously also be used for re-authentication, where a previously authenticated subscriber is authenticated again. In this case the authentication means 5 do not request or receive any new "up to date" authentication information from the mobile communication system. Instead the previously obtained triplets, which have been stored in the memory of the authentication means 5, are used for the re-authentication. Otherwise the re-authentication is performed as explained above. In this case the extra status check ensures that the "old" authentication information can be used without any risk, because if changes have occurred recently for the subscriber (such as canceling the account), then these changes can be detected in the status check, which is based on current status information.

Figure 2 is a block diagram illustrating a second preferred embodiment of the present invention. The embodiment of Figure 2 is very similar to the one explained in connection with Figure 1. Thus the embodiment of Figure 2 will in the following mainly be described by explaining the differences as compared to the embodiment of Figure 1.

In Figure 2 the subscriber 1' is not a subscriber with an EAP SIM client, but instead the authentication of the subscriber 1' is carried out based on a user identity and a password which is known by the user of the WLAN terminal. The network part of the system is almost identical to the one explained in connection with Figure 1, because the same network elements can handle both subscribers with EAP SIM clients and subscribers which are authenticated with a user identity and password. However, in this case the authentication means 5' are arranged in the server 4', which thus is capable of authenticating the subscriber 1'. The authentication means 5' can be implemented as a circuit, as a computer program, or a combination of these. The home location register and the authentication server of Figure 1 are not shown in Figure 2, because they are not needed to authenticate a subscriber whose authentication is based on a user identity and password. The system of Figure 2 can, however, advantageously include also the home location register 6 and the authentication server 5 of Figure 1, in order to be able to authenticate both subscribers with EAP SIM clients and subscribers whose authentication is based on a user identity and password.

In the embodiment of Figure 2 it is not necessary to obtain any authentication information from a mobile communication system. Instead, the authentication information consisting of user identities and passwords of the subscribers can be stored in advance in the authentication means 5', when subscriber accounts are opened in the system.

The authentication message C' transmitted by the subscriber in Figure 2 thus includes a password or a user identity and a password. The authentication means 5' in the server 4' receive this message, and check if the password for the subscriber in question is correct. If so, then the authentication means 5' indicate that the authentication has been successful. The checking means 9' of the server 4' are arranged to request E status information for the subscriber in question from the subscriber database 7. The received F status information is used to check whether or not the authenticated subscriber 1 has access to the system via an other authentication mechanism. If so, then a situation would exist where the same subscriber, who is being authenticated, would already have access to the system with another terminal. If such a situation is detected, then a message G is transmitted to the access point to indicate that the authentication has failed. Otherwise this message G is used to indicate to the access point that authentication has been successful. If the authentication has been successful, then the server 4' transmits a message H to the subscriber database 7 in order to store in the subscriber database information indicating that the user has been successfully authenticated and is provided with access to the system. This stored information will be retrieved in a possible later status check to indicate that the subscriber has access to the system via an other authentication mechanism. Thus it can be avoided that the same subscriber would gain access to the system with another terminal.

When the authenticated subscriber for some reason brakes the connection in order to stop using the services available in the network, then the access point 2 and/or access server 3 detects this and transmits, for instance, an "accounting stop" message to the server 4', in order to indicate that the subscriber does no longer have access to the network. The server 4' forwards this information in order to stop the accounting, and also transmits a message to the subscriber database 7 to indicate that the subscriber no longer has access to the system. This information is stored in the subscriber database in order to be retrieved as an indication that the subscriber does not have access to the system via an other authentication mechanism when the subscriber is authenticated for the next time.

It has been explained in the above description of the embodiments that in the embodiment of Figure 1 the status check is used to ensure that the account of the subscriber has not been cancelled, and in the embodiment of Figure 2 to check that the subscriber does not have access to the system with another authentication mechanism. However, it is advantageous to provide the same authentication procedure with both of these checks. Thus, a status check is done to ensure that the subscriber account has not been cancelled and that the subscriber does not have access to the system via another authentication mechanism. In this case a message indicating that the authentication has failed is transmitted, if either or both of these checks have a positive outcome, in other words the account has been cancelled or the subscriber has access via an other authentication mechanism.

It is to be understood that the above description and the accompanying Figures are only intended to illustrate the present invention.

## Claims

1. A method for authenticating a subscriber of a communication system, said method comprising:
receiving (C, C') an authentication message from a subscriber, and
checking the authenticity of the subscriber by utilizing contents of said authentication message, **characterized by**
retrieving (E, F) status information for said subscriber from a subscriber database, when said check indicates that the subscriber has been successfully authenticated,
transmitting (G) a message indicating that the authentication of said subscriber has failed, if one or more of the following conditions apply:
- the authentication of said subscriber based on the content of said authentication message has failed,
- the status information indicates that the subscriber has access to the system via another authentication mechanism, or
- the status information indicates that the account of the subscriber has been cancelled.

2. The method of claim 1, **characterized in that** said authentication message is a re-authentication message.

3. The method of claim 1, **characterized in that** said communication system is a WLAN system and said method further comprises:
transmitting (A) from said WLAN system a request for authentication information to a mobile communication system,
receiving (B) authentication information from the mobile communication system, and
checking the authenticity of the subscriber by utilizing the contents of said authentication message and the authentication information received from the mobile communication system.

4. The method of any one of claims 1 to 3, **characterized in that** said subscriber is an EAP SIM client.

5. A communication system comprising:
an access point (2) providing access to the system for authenticated subscribers,
a subscriber database (7) containing information about the subscribers of the system, and
authentication means (5, 5') for authenticating a subscriber (1, 1') by utilizing contents of an authentication message received from said subscriber (1, 1'), **characterized in that** said communication system further comprises:
checking means (9, 9') for retrieving from the subscriber database (7) status information for said subscriber (1, 1') when the authentication means indicate that said subscriber (1, 1') has been successfully authenticated, for carrying out a check based on said retrieved status information, and for transmitting to the access point (2):
- a message indicating that the authentication of said subscriber (1, 1') has failed, when the check indicates that the subscriber has access to the system via another authentication mechanism, and/or that the account of the subscriber has been cancelled, or
- a message indicating that the authentication of the subscriber (1, 1') has been successful, when the check indicates that the subscriber has not access to the system via another authentication mechanism, and that the account of the subscriber has not been cancelled.

6. The communication system of claim 5, **characterized in that**
said access point (2) is a base station providing authenticated subscribers with access to the communication system over a radio interface, r
said authentication means (5) are arranged to transmit a request for authentication information to a cellular radio system, to receive authentication information from the cellular radio system and to authenticate said subscriber (1) based on the contents of the authentication message and the authentication information.

7. The communication system of claim 5 or 6, **characterized in that** said authentication message is a re-authentication message.

8. The communication system of any one of claims 5 to 7, **characterized in that** said communication system is a WLAN system, said subscriber is an EAP SIM client and said checking means (9, 9') are arranged in a Radius server (4, 4').

9. A server (4, 4') of a communication system, said server being responsive to an authentication means of the communication system, **characterized in that** said server comprises checking means (9, 9') which, when said authentication means (5, 5') indicate that the authentication of a subscriber (1, 1') has been successful, are arranged to retrieve status information for said subscriber from a subscriber database (7), to carry out a check based on said status information, and to transmit:
- a message indicating that the authentication of the subscriber (1, 1') has failed, when the result of the check indicates that the subscriber has access to the communication system via another authentication mechanism, and/or that the account of the subscriber has been cancelled, or
- a message indicating that the authentication of the subscriber (1, 1') has been successful, when the check indicates that the subscriber has not access to the communication system via another authentication mechanism, and that the account of the subscriber has not been cancel led.

10. The server of claim 9, **characterized in that** said server (4, 4') is a Radius server.

## Patentansprüche

1. Verfahren zum Authentifizieren eines Teilnehmers eines Kommunikationssystems, wobei das Verfahren aufweist:
Empfangen (C, C') einer Authentifkationsnachricht von einem Teilnehmer, und
Überprüfen der Authentizität des Teilnehmers unter Verwendung von Inhalten der Authentifikationsnachricht, ***gekennzeichnet durch***
Abfragen (E, F) einer Statusinformation für den Teilnehmer von einer Teilnehmerdatenbank, wenn das Überprüfen anzeigt, dass der Teilnehmer erfolgreich authentifiziert worden ist,
Senden (G) einer Nachricht, die anzeigt, dass die Authentifikation des Teilnehmers fehlgeschlagen ist, wenn eine oder mehrere der folgenden Bedingungen zutreffen:
- die Authentifikation des Teilnehmers auf der Grundlage des Inhalts der Authentifikationsnachricht ist fehlgeschlagen,
- die Statusinformation zeigt an, dass der Teilnehmer über einen anderen Authentifikationsmechanismus Zugang zu dem System hat, oder
- die Statusinformation zeigt an, dass das Konto des Teilnehmers gelöscht worden ist.

2. Verfahren nach Anspruch 1, ***dadurch gekennzeichnet, dass*** die Authentifikationsnachricht eine Nachricht einer erneuten Authentifikation ist.

3. Verfahren nach Anspruch 1, ***dadurch gekennzeichnet, dass*** das Kommunikationssystem ein WLAN-System ist und das Verfahren weiterhin aufweist:
Senden (A) einer Anforderung nach einer Authentifikationsnachricht von dem WLAN-System zu einem mobilen Kommunikationssystem,
Empfangen (B) einer Authentifikationsinformation von dem mobilen Kommunikationssystem, und
Überprüfen der Authentizität des Teilnehmers Unter Verwendung der Inhalte der Authentifikationsnachricht und der Authentifikationsinformation, die von dem mobilen Kommunikationsystem empfangen wird.

4. Verfahren nach einem der Ansprüche 1 bis 3, ***dadurch gekennzeichnet, dass*** der Teilnehmer ein EAP-SIM-Client ist.

5. Kommunikationssystem, das aufweist:
einen Zugangspunkt (2), der einen Zugang für authentifizierte Teilnehmer vorsieht,
eine Teilnehmerdatenbank (7), die eine Information über die Teilnehmer des Systems enthält, und
eine Authentifikationseinrichtung (5, 5') zum Authentifizieren eines Teilnehmers (1, 1') unter Verwendung der Inhalte einer Authentifikationsnachricht, die von dem Teilnehmer (1, 1') empfangen wird, ***dadurch gekennzeichnet, dass** das* Kommunikationssystem weiterhin aufweist:
eine Überprüfungseinrichtung (9, 9') zum Abfragen einer Statusinformation für den Teilnehmer (1, 1') von der Teilnehmerdatenbank (7), wenn die Authentifikationseinrichtung anzeigt, dass der Teilnehmer (1, 1') erfolgreich authentifiziert worden ist, zum Ausführen eines Überprüfens auf der Grundlage der abgefragten Statusinformation und zum Senden zu dem Zugangspunkt (2):
- einer Nachricht, die anzeigt, dass die Authentifikation des Teilnehmers (1, 1') fehlgeschlagen ist, wenn das Überprüfen anzeigt, dass der Teilnehmer über einen anderen Authentifikationsmechanismus Zugang zu dem System hat und/oder das Konto des Teilnehmers gelöscht worden ist, oder
- einer Nachricht, die anzeigt, dass die Authentifikation des Teilnehmers (1, 1') erfolgreich gewesen ist, wenn das Überprüfen anzeigt, dass der Teilnehmer über einen anderen Authentifikationsmechanismus keinen Zugang zu dem System hat, und dass das Konto des Teilnehmers nicht gelöscht worden ist.

6. Kommunikationssystem nach Anspruch 5, ***dadurch gekennzeichnet, dass***
der Zugangspunkt (2) eine Basisstation ist, die authentifizierte Teilnehmer mit einem Zugang zu dem Kommunikationssystem über eine Funkschnittstelle versieht,
die Authentifikationseinrichtung (5) angeordnet ist, um eine Anforderung nach einer Authentifikationsinformation zu einem zellularen Funksystem zu senden, um eine Authentifikationsinformation von dem zellularen Funksystem zu empfangen und um den Teilnehmer (1) auf der Grundlage der Inhalte der Authentifikationsnachricht und der Authentifikationsinformation zu authentifizieren.

7. Kommunikationssystem nach Anspruch 5 oder 6, ***dadurch gekennzeichnet, dass*** die Authentifikationsnachricht eine Nachricht einer erneuten Authentifikation ist.

8. Kommunikationssystem nach einem der Ansprüche 5 bis 7, ***dadurch gekennzeichnet, dass*** das Kommunikationssystem ein WLAN-System ist, der Teilnehmer ein EAP-SIM-Client ist und die Überprüfungseinrichtung (9, 9') in einem RADIUS-Server (4, 4') angeordnet ist.

9. Server (4, 4') eines Kommunikationssystems, wobei der Server auf eine Authentifikationseinrichtung des Kommunikationssystems reagiert, ***dadurch gekennzeichnet, dass*** der Server eine Überprüfungseinrichtung (9, 9') aufweist, welche, wenn die Authentifikationseinrichtung (5, 5') anzeigt, dass die Authentifikation eines Teilnehmers (1,1') erfolgreich gewesen ist, angeordnet ist, um eine Statusinformation für den Teilnehmer von einer Teilnehmerdatenbank (7) abzufragen, um ein Überprüfen auf der Grundlage der Statusinformation auszuführen, um zu senden:
- eine Nachricht, die anzeigt, dass die Authentifikation des Teilnehmers (1, 1') fehlgeschlagen ist, wenn das Ergebnis des Überprüfens anzeigt, dass der Teilnehmer über einen anderen Authentifikationsmechanismus Zugang zu dem Kommunikationssystem hat und/oder das Konto des Teilnehmers gelöscht worden ist, oder
- eine Nachricht, die anzeigt, dass die Authentifikation des Teilnehmers (1, 1') erfolgreich gewesen ist, wenn das Überprüfen anzeigt, dass der Teilnehmer über einen anderen Authentifkationsmechanismus keinen Zugang zu dem Kommunikationssystem hat, und dass das Konto des Teilnehmers nicht gelöscht worden ist.

10. Server nach Anspruch 9, ***dadurch gekennzeichnet, dass*** der Server (4, 4') ein RADIUS-Server ist.

## Revendications

1. Procédé d'authentification d'un abonné d'un système de communication, ledit procédé comprenant :
la réception (C, C') d'un message d'authentification en provenance d'un abonné, et le contrôle de l'authenticité de l'abonné en utilisant des contenus dudit message d'authentification, **caractérisé par** :
l'extraction (E, F) d'informations d'état dudit abonné à partir d'une base de données d'abonnés, lorsque ledit contrôle indique que l'abonné a été authentifié avec succès,
la transmission d'un message (G) indiquant que l'authentification dudit abonné a échoué, si une ou plusieurs des conditions suivantes s'appliquent :
- l'authentification dudit abonné fondée sur le contenu dudit message d'authentification a échoué,
- les informations d'état indiquent que l'abonné a accès au système par l'intermédiaire d'un autre mécanisme d'authentification, ou
- les informations d'état indiquent que le compte de l'abonné a été annulé.

2. Procédé selon la revendication 1, **caractérisé en ce que** ledit message d'authentification est un message de réauthentification.

3. Procédé selon la revendication 1, **caractérisé en ce que** ledit système de communication est un système WLAN et ledit procédé comprend de plus :
la transmission (A) à partir dudit système WLAN d'une requête d'informations d'authentification vers un système de communication mobile,
la réception (B) d'informations d'authentification en provenance du système de communication mobile, et
le contrôle de l'authenticité de l'abonné en utilisant les contenus dudit message d'authentification et les informations d'authentification reçues en provenance du système de communication mobile.

4. Procédé selon l'une quelconque des revendications 1 à 3, **caractérisé en ce que** ledit abonné est un client EAP SIM.

5. Système de communication comprenant :
un point d'accès (2) fournissant un accès au système pour les abonnés authentifiés,
une base de données d'abonnés (7) contenant des informations qui concernent les abonnés du système, et
des moyens d'authentification (5, 5') pour authentifier un abonné (1, 1') en utilisant des contenus d'un message d'authentification reçu en provenance dudit abonné (1, 1'), **caractérisé en ce que** ledit système de communication comprend de plus :
des moyens de contrôle (9, 9') pour extraire de la base de données d'abonnés (7) des informations d'état dudit abonné (1, 1') lorsque les moyens d'authentification indiquent que ledit abonné (1, 1') a été authentifié avec succès, pour effectuer un contrôle fondé sur lesdites informations d'état extraites, et pour transmettre au point d'accès (2) :
- un message qui indique que l'authentification dudit abonné (1, 1') a échoué, lorsque le contrôle indique que l'abonné a accès au système par l'intermédiaire d'un autre mécanisme d'authentification, et / ou que le compte de l'abonné a été annulé, ou
- un message qui indique que l'authentification de l'abonné (1, 1') a été couronnée de succès, lorsque le contrôle indique que l'abonné n'a pas accès au système par l'intermédiaire d'un autre mécanisme d'authentification, et que le compte de l'abonné n'a pas été annulé.

6. Système de communication selon la revendication 5, **caractérisé en ce que** :
ledit point d'accès (2) est une station de base qui fournit aux abonnés authentifiés un accès au système de communication par l'intermédiaire d'une interface radio,
lesdits moyens d'authentification (5) sont agencés de manière à transmettre une requête d'informations d'authentification à un système radio cellulaire, à recevoir des informations d'authentification en provenance du système radio cellulaire, et à authentifier ledit abonné (1) sur la base des contenus du message d'authentification et des informations d'authentification.

7. Système de communication selon la revendication 5 ou 6, **caractérisé en ce que** ledit message d'authentification est un message de réauthentification.

8. Système de communication selon l'une quelconque des revendications 5 à 7, **caractérisé en ce que** ledit système de communication est un système WLAN, ledit abonné est un client EAP SIM, et lesdits moyens de contrôle (9, 9') sont agencés dans un serveur Radius (4, 4').

9. Serveur (4, 4') d'un système de communication, ledit serveur étant sensible à des moyens d'authentification du système de communication, **caractérisé en ce que** ledit serveur comprend des moyens de contrôle (9, 9') qui, lorsque lesdits moyens d'authentification (5, 5') indiquent que l'authentification d'un abonné (1, 1') a été couronnée de succès, sont agencés pour extraire les informations d'état dudit abonné à partir d'une base de données d'abonnés (7), pour effectuer un contrôle sur la base desdites informations d'état, et pour transmettre :
- un message qui indique que l'authentification de l'abonné (1, 1') a échoué, lorsque le résultat du contrôle indique que l'abonné a accès au système de communication par l'intermédiaire d'un autre mécanisme d'authentification, et / ou que le compte de l'abonné a été annulé, ou
- un message qui indique que l'authentification de l'abonné (1, 1') a été couronnée de succès, lorsque le contrôle indique que l'abonné n'a pas accès au système de communication par l'intermédiaire d'un autre mécanisme d'authentification, et que le compte de l'abonné n'a pas été annulé.

10. Serveur selon la revendication 9, **caractérisé en ce que** ledit serveur (4, 4') est un serveur Radius.
